# EUROPEAN PATENT SPECIFICATION

(11) **EP 0 772 731 B1**
(45) Date of publication and mention of the grant of the patent: **11.06.2003**
(21) Application number: 95937244.2
(22) Date of filing: 15.11.1995
(51) Int. Cl.: F01D 5/14, B64C 3/14, F03D 1/06

(54) **AIRFOIL SECTION**
FLÜGELPROFIL
PROFIL AERODYNAMIQUE

(30) Priority: 17.11.1994 RO 9401863
(43) Date of publication of application: 14.05.1997
(73) Proprietor: Taposu, Iosif, Bucharest (RO)
(72) Inventor: Taposu, Iosif, Bucharest (RO)
(74) Representative: RACKETTE Partnerschaft Patentanwälte
(86) International application number: RO9500015
(87) International publication number: WO96016252

(56) References cited:
- DE-A- 4 009 120
- FR-A- 578 740
- FR-A- 776 676
- FR-A- 995 551
- GB-A- 625 342
- GB-A- 1 599 633
- US-A- 1 752 378
- US-A- 4 641 796

## Description

### TECHNICAL FIELD

The invention refers to an airfoil section, especially used in the aerospace industry for the components of airplanes. rockets, space - shuttles, propellers. in the naval industry for the hull of ships, propellers. submarines also for fans, air- conditioning plants, hydraulic turbines, missiles and torpedoes.

### BACKGROUND ART

The class of airfoil sections having a round leading edge is well- known each member of this class being characterized by a leading edge in form of a circle with a given radius. The main disadvantage associated with the above-mentioned class consists in the existence of a stagnation point. which causes great loss of mechanical energy,that is a great pressure drag coefficient C_{D}. Increasing flight speed worsens the phenomenon that takes dramatic proportions in supersonic and hypersonic regimes .

Well-known are also the airfoil sections having an acute leading edge defined by a dihedral angle, that is the conical profile, or those having a half moon shape. The disadvantages of these airfoil sections are the early flow separations that release many negative effects, among which the abrupt increase of drag.

### 1. The prior art document US-A-4 641 796.

We refer to the whole document, and especially: column 3, lines 48-52; column 8, lines 28-39; column 11, lines 12-56; Figures 8 and 13; claims 15, 16, 19, 20.

The airfoil described in the document is a new supercritical one, having a rounded leading edge. As compared with other supercritical airfoils the geometry is modified and claimed mainly along the lower side where can be identified three inflexion points. The leading edge radius is small, also probably the airfoil is suitable for high subsonic speeds (Mach > 0.5). For the further discussion we use the one half thickness distribution g(x) along the unit chord, also its first order derivative g'(x).

At the leading edge the referred airfoil has g'(0) ≠ 0. More precisely, because the leading edge is rounded we have g'(0) = + ∞. If force the leading edge geometry to an ideal cusped point, i.e. consider the leading edge radius as being zero, then we can see the tangent lines on the upper / lower sides as giving a finite g'(0), but not zero. The claims 1-3 refer to the airfoils having g'(0) = 0 only. The cones, parabolic airfoils etc. have 0 < g'(0) < ∞, and are not claimed according to 95 937 244.2-2135. A similar discussion is valid at the trailing edge too. Here the prior art document confirms a "very small degree of concave curvature", i.e. the upper and lower sides are not tangent to the skeleton line in x = 1, and g'(1) ≠ 0. The skeleton line is parallel (coincides) to the abscissa for symmetrical airfoils only.

The airfoil of 95 937 244.2-2135 (a very rich family) is not depending on the speed regime of the intended use (subsonic, transonic, supersonic). Also, it is not necessary a skilled man to take the shaper leading / trailing edges into consideration because physically the word "sharp" means always a "technological minimum", i.e. as small as possible according to the application. The theoretical extreme value (the technological minimum is zero) of tangency between the upper and lower sides in the leading / trailing edge points must be with the skeleton line, not with the chord, and in turn this is not always parallel to the abscissa.

The succession of concave/convex, respectively convex / concave arcs according to claim 1 cannot be identified at least along the upper side neither near x = 0, nor x = 1. The upper side is a convex arc along the whole unit chord, and has none inflexion point. According to claim 1 minimum two such points are necessary.

### 2. The prior art document GB-A-625 342.

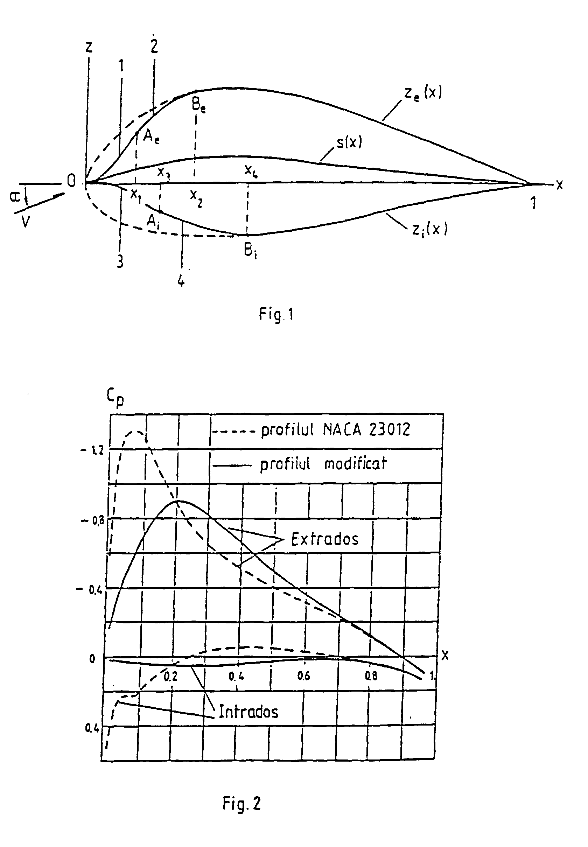

We refer to the whole document, also especially: column 2, lines 68-78; columns 9-10, lines 60-103; Figs. 1-3.

These airfoils have sharp leading and trailing edges, and the document declares as being suitable for the supersonic flight. If in the previous case of US-A-4 641 796 consider the leading edge radius as being zero, then a similar discussion can be developed, with the same conclusion.

More, the "small included angles" where meet the upper and lower sides in the leading, respectively trailing edges means rigorously g'(0) ≠ 0 and g'(1) ≠ 0. On the other hand side it is not clear at all what means the word "small". Considering the symmetric airfoil for which g(x) = asin(bx) we have g'(0) = ab and g'(1) = abcos(b), i.e. ab and abcos(b) must be small. If ask for g'(1) = 0 it follows g'(0) = 0 and the airfoil degenerates into a flat plate having the thickness zero. The same conclusion is valid for the airfoil having g(x) = a - bx². If g'(1) is small then g'(0) is also small and the plate is very thin.

From Figs. 1-3, also analyzing the text, it follows the upper and lower sides, respectively the thickness distribution along the chord have no inflexion points, again in contradiction with the claims 1-3.

### 3. The prior art document FR-A-776 676

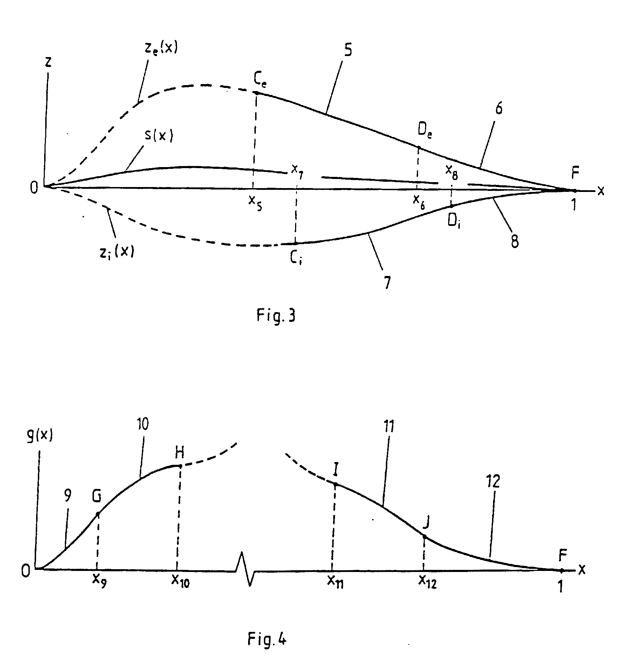

Here we have specialized airfoils for helicoidal turbines, also the information about their geometry is poor and it is difficult to do a precise analysis. On the other hand side, from Fig. 2 and Fig. 3 it follows obviously the thickness distribution of these airfoils as having no inflection points along the chord.

### DISCLOSURE OF INVENTION

According to this invention the airfoil section is obtained by modifying the geometry of the leading edge of a given profile so that for every skeleton line shape. the half thickness distribution g(x) satisfies the conditions g(0)=g'(0)=0. It means that thickness and its first order derivative cancel in the leading edge. The modified profile consists on the upper side of a concave arc tangent to the skeleton line s(x) in point O, which passes through the first inflection point on the upper side, and a convex arc which passes through this inflection point. and also through the first junction point (with the old profile) on the upper side having a defined abscissa. On the lower side the leading edge outline consists of a convex arc tangent to s(x) in the point O, which passes through the first inflection point on the lower side, and a concave arc which passes through this point and the first junction point on the lower side having also a defined abscissa .

The airfoil section. according to the invention. is obtained by modifying also the trailing edge geometry , so that the one half thickness distribution satisfies in the trailing edge point of an airfoil section the conditions g( 1)=g'(1)=0. i.e. the thickness and its first order derivative cancel in this point. On the upper side the modified profile consists of a convex arc which passes through the second junction point on the upper side. also through the second inflection point on the upper side, and a concave arc which passes through the above mentioned second inflection point and is tangent to the skeleton line in the trailing edge F. On the lower side the modified profile consists of a concave arc which passes through the second junction point on the lower side, also through the second inflection point on the lower side. and a convex arc which passes through the second inflection point on the lower side. being also tangent to the skeleton line in the trailing edge F.

The airfoil section, according to the invention, can be also obtained by using a defined skeleton line s(x) and constructing an one half thickness distribution g(x) which satisfies in the leading and trailing edges the above-mentioned conditions. the profile geometry being determined by convex and concave arcs which pass through the mentioned points, i.e. the defined ones.

The airfoil section. according to the invention. can be also used for the construction of aerodynamic axial symmetric bodies by turning the bi-directional profile around the symmetry axis perpendicular on the middle of the chord.

The main advantages of the proposed technical solution are:
- leads to obtain a very rich class of airfoil sections which permits an adequate solution for every concrete design problem;
- a reduced pressure drag, the efficiency of the solution is improving while increasing flight speed;
- the possibility to obtain motions without shock waves on the body surface;
- high lift coefficients at low speeds:
- high lift/drag ratios at all speeds:
- a relatively uniform loading distribution along the chord. that is a reduction of pressure gradients in the leading edge zone;
- an extension of the useful incidence angles range, and the framing of this range between convenable limits according to the imposed design criteria;
- a significant delay of the stall;
- the possibility of moving the aerodynamic center forwards, to the leading edge, or
   downwards to 50 percent of the chord ,in order to reduce the jump of the pitching moment, when the body passes from subsonic to supersonic regime;
- small gradients of pitching moments with the useful incidence angles at low and high speeds;
- the possibility to obtain the bi-directional profile. i.e. the airfoil sections for which the leading and trailing edges have the same statute with respect to the aerodynamic performances;
- the axisymmetric bodies obtained by turning a bi-directional profile around the symmetry axis which is perpendicular on the middle of its chord has the same aerodynamic performances in all flight directions, and the aerodynamic center lies in a small neighbourhood of the symmetry axis at all flight regimes, i.e. subsonic, transonic, supersonic and hypersonic.

### BRIEF DESCRIPTION OF DRAWINGS

Further, four examples of realizing the invention are given, also by using Figs. 1-6 which represent:
Fig.1 - a modified rounded nose airfoil section;
Fig.2 - the pressure coefficients on the airfoil section NACA 23012. and a modified version of this airfoil section in the leading edge zone. both at α = 3.3°. incompressible regime;
Fig.3 - an airfoil section with modified leading and trailing edges zones;
Fig.4 - the one half thickness distribution along the chord for an arbitrary imposed skeleton line;
Fig.5 - some modified airfoil sections having the thickness distribution defined by using the skeleton line which is supposed to be a positive function;
Fig.6 - a bi-directional airfoil section which by turning around the perpendicular axis passing through the middle of the chord produces an axial symmetric body with equal aerodynamic performances in all flight directions.

### BEST MODE FOR CARYING OUT

Let us consider an airfoil section having a rounded leading edge, and which is placed in the Oxz plane. its unity chord being along the Ox axis, and the origin O is that unique point on the contour where the Oz tangent line is perpendicular on the chord. There are used the well known notations:
s(x) - the skeleton line distribution along the unity chord;
g(x) - the one half thickness distribution along the chord;
s'(x), g'(x) - the first order derivatives of functions s. and g respectively in the point having abscissa x;
zₑ(x) - the upper side of the airfoil section. zₑ(x)=s(x)+g(x);
zᵢ(x) - the lower side, zᵢ(x)=s(x)-g(x);
α - the incidence angle;
V - the flight speed:

Cₚ - the pressure coefficient;
C_{D} - the pressure drag coefficient:
C_{L} - the lift coefficient.

Because no matter the magnitude V of the flight speed. in the stagnation point (which in our case coincides with O) the local speed cancels that means that in a small neighbourhood of O the speed has great negative gradients and the first losses of kinetic energy occur. On the other hand, in another small neighbourhood of the stagnation point O, on both the upper and lower side the local speed abruptly increases unto values of V order. having great positive gradients, and again losses of kinetic energy. Therefore, the stagnation point produces two times losses of mechanical energy and this means increased pressure drag coefficient C_{D}. This negative phenomenon is more and more significant with the increasing V. Having in mind that the C_{D} coefficient is a very important performance criterium for every airfoil section. it means that the stagnation point must be removed, i.e. we must give up the class of rounded nose airfoil sections. This giving up is possible if we impose at the leading edge the Kutta-Jukovsky condition. i.e. the equality ΔCₚ(0)=0. where Δ Cₚ the jump of pressure coefficient Cₚ in this point is. The Kutta-Jukovsky condition is fulfilled if the thickness distribution satisfies in this point the conditions g(0)=g'(0)=0. i.e. the leading edge is sharp, and both the upper side zₑ(x), also lower side zᵢ(x) are tangent to the skeleton line s(x) in O.

As a first example of realization, having in mind the imposed conditions, and using an airfoil section with rounded leading edge which has the known geometric characteristics. one obtains an airfoil section with modified leading edge. On the upper side the airfoil section consists of a concave arc 1 tangent to s(x) in the point O and passes through the point Aₑ having a defined abscissa x₁, also a convex arc 2 passing through Aₑ and a point Bₑ with defined abscissa x₂. On the lower side the contour consists of a convex arc 3 tangent to s(x) in O. and passes through the point Aᵢ having a defined abscissa x₃, also a concave arc 4 passing through Aᵢ, and through the point Bᵢ with defined abscissa x₄. The abscissas x₁, x₂, x₃ and x₄ are defined by using the imposed design criteria, also the compatibility conditions as obtained from the continuity of contour and its gradient in these points. The Aₑ, Bₑ, Aᵢ and Bᵢ represent:
Aₑ - the first inflection point on the upper side;
Bₑ - the first junction point (with the old airfoil section) on the upper side;
Aᵢ - the first inflection point on the lower side;
Bᵢ - the first junction point on the lower side.

The backwards limit position of junction points Bₑ and Bᵢ is restricted by the imposed design criteria for the airfoil section. For illustration one considers a modified alternative of the airfoil section NACA 23012 in the leading edge zone which is defined by taking x₁=0.06, x₂=0.17, x₃=0.08, x4=0.2. The four arcs which define the modified airfoil section are approximated by conic sections. The pressure coefficients Cₚ are theoretically obtained in ideal incompressible flow for the incidence angle α=3.3°, and observes that both the initial airfoil section with rounded leading edge and the modified airfoil section have a lift coefficient C_{L} of about 0.5. For the modified airfoil section one finds a spectacular diminution of pressure gradients in the leading edge zone as in Fig.2.

In a second example of realization the Kutta-Jukovsky condition must be imposed in the trailing edge too, and for this it is sufficient for the thickness distribution to satisfy at x=1 the conditions g(1)=g'(1)=0, i.e. the trailing edge must be sharp, and both the upper and lower sides of contour be tangent to the skeleton line in this point. The modified airfoil section in the trailing edge zone consists on the upper side of a convex arc 5 passing through the points Cₑ and Dₑ having the defined abscissas x₅, and x₆ respectively, also the concave arc 6 passing through Dₑ and is tangent to s(x) in the trailing edge F having abscissa x=1. On the lower side the modified airfoil section composes of a concave arc 7 passing through the points Cᵢ and Dᵢ having the defined abscissas x₇, and x₈ respectively. also a convex arc 8 passing through Dᵢ and is tangent to s(x) in the trailing edge F. The abscissas x₅, x₆, x₇ and x₈ are defined by using the imposed design criteria, and the compatibility conditions as obtained from continuity of contour and its gradient in these points. The points Cₑ, Dₑ, Cᵢ, Dᵢ represent:
Cₑ - the second junction point (with the old airfoil section) on the upper side;
De - the second inflection point on the upper side;
Cᵢ - the second junction point on the lower side;
Dᵢ - the second inflection point on the lower side.

The forwards limit position of junction points Cₑ and Cᵢ is restricted by the imposed design criteria for the modified airfoil section, and always the inequalities x₂>x₁, x₄>x₃, x₆>x₅ and x₈>x₇ must be satisfied.

In a third example of realization one considers an airfoil section which has the skeleton line s(x) as an arbitrary smooth function, and the one half thickness ditribution g(x) as a positive function which satisfies at the leading/trailing edges the conditions g(0)=g'(0)=0, and g( 1)=g'(1)=0 respectively. In the leading edge zone g(x) composes of a concave arc 9 tangent to the Ox axis in the origin 0, and passes through a point G having a defined abscissa x₉, also a convex arc 10 passing through G and a point H which has the defined abscissa x₁₀.In the trailing edge zone g(x) composes of a convex arc 11 which passes through the points I and J having the defined abscissas x₁₁, and x₁₂ respectively, also the concave arc 12 passing through J and is tangent to the Ox axis in the trailing edge F. The abscissas x₉, x₁₀, x₁₁, and x₁₂ are defined by using the design criteria for the thickness distribution 2g(x) in the interval [0,1], also the compatibility conditions as obtained from the continuity conditions of g(x) and g'(x) in these points. If g(x) has two inflection points only along the whole chord then the arcs 10 and 11 coincide. i.e. we have x₁₁=x₉, and x₁₂=x₁₀. The points G,H,I, and J represent:
G-the first inflection point of thickness distribution;
H-the second inflection point of thickness distribution (if it exists);
I-the last but one inflection point of thickness distribution (if it exists);
J-the last inflection point of thickness distribution.

Let us consider an airfoil section having a positive skeleton line s(x), tangent to the chord in both the leading and trailing edges, that means the conditions s'(0)=s'(1)=0 are satisfied.

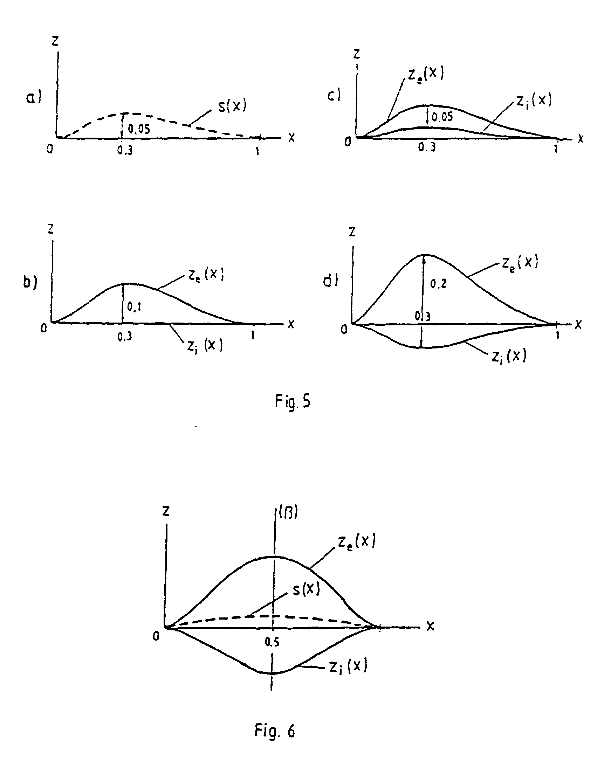

Moreover, let us admit s(x) as having a single extremum point (maximum) along the chord [0,1], and this maximum being ζ =0.05. attained at 30 percent of the chord as in Fig.5a). Using this skeleton line we can define the one half thickness distribution g(x) of the airfoil section with sharp leading and trailing edges by putting g(x)=ks(x). where k is a real positive number. Because the conditions g(0)=g'(0)=0 and g( 1)=g'(1)=0 are satisfied. for every k we obtain an airfoil section which has the maximum thickness 0.1k placed at 30 percent of the chord. In this case the function g(x) has a single maximum along the chord, also the arcs 10 and 11 coincide, i.e. we have x₁₁=x₉<0.3, x₁₂=x₁₀>0.3. To illustrate the construction manner of an aero and/or hydrodynamic profile we consider in the relation g(x)=ks(x) three particular values of k as follows:
i) k=1. In this case the upper surface is zₑ(x)=2s(x), and the lower surface is zᵢ(x)=0 which coincides with the chord. The airfoil section has a flat lower side as in Fig.5b) and the maximum thickness is 10 percent of the chord:
ii) k=1/2. Now we obtain a thin airfoil section having the maximum thickness 5 percent of the chord, the upper side is zₑ(x)=3s(x)/2, and the lower side is zᵢ(x)=s(x)/2 as in Fig.5c);
iii) k=2. The obtained airfoil section is very thick, having the maximum thickness 20percent of the chord. The upper side is zₑ(x)=3s(x). the lower side is zᵢ(x)=-s(x), the airfoil section being sketched in Fig.5d).

An important subclass of airfoil sections with sharp leading edge is that for which the skeleton line s(x) and the one half thickness distribution g(x) satisfy the equalities s(x)=s(1-x), g(x)=g(1-x), x[0,1], where g(x) satisfies also the conditions g(0)=g'(0)=0.These conditions tell that every airfoil section is symmetric about the axis (β) perpendicular to the middle of the chord as in Fig. 6, and also we have the relations x₁₁=1-x₁₀, x₁₂=1-x₉, s'(0.5)=g'(0.5)=0. Because from the aerodynamic point of view the leading and trailing edges can be permuted. we call this airfoil section as bi-directional. For given V and α the bi-directional airfoil section has the same aerodynamic performances when the flow attack it from the leading, or the trailing edges.

In a fourth example of realization we turn a bi-directional airfoil section around the symmetry axis (β) and obtain an axisymmetric body which for given V and α has equal aerodynamic performances in all flight directions.

### REFERENCES

1. Abbot I.H., Doenhoff A.E., Stivers L.S. Summary of airfoil data. NACA Rep.824. 1945, pp.258-522.
2. Liebeck R.H. A class of airfoils designed for high lift in incompressible flow. Journal of
   Aircraft, vol.10, Oct. 1973. pp.610-617.
3. Schlichting H.. Truckenbrodt E. Aerodynamik des Flugzeuges, I. Springer Verlag, 1959, pp.371.
4. Landau L.. Lifchitz E. Mecanique des fluides. Editions Mir, Moscou 1971. pp.68-70.
5. Carafoli E.. Constantinescu V.N. Dinamica fluidelor incompresibile. Ed. Academiei, Bucuresti, 1981, pp.405-406.

## Claims

1. An airfoil section having a defined one half thickness distribution g(x) along the chord, and a skeleton line function s(x) corresponding to a known airfoil section, **characterized by** the fact that no matter the skeleton line or thickness shapes both the one half thickness and its first order derivative cancels in the leading edge, i.e. we have g (0) = g'(0) = 0, so that on the upper side the airfoil section composes of a concave arc (1) tangent to the skeleton line s(x) in the point (O), and which passes through a point (Aₑ) called the first inflexion point on the upper side and having the defined abscissa (x₁), also a convex arc (2) passing through (Aₑ) and through a point (Bₑ) called the first junction point on the upper side having the defined abscissa (x₂), on the lower side the contour of the leading edge zone being composed of a convex arc (3) tangent to s(x) in (O) and passing through the point (Aᵢ) called the first inflexion point on the lower side and having the defined abscissa (x₃), the concave arc (4) which passes through the point (Aᵢ), also passing through the point (Bᵢ) called the first junction point on the lower side having the defined abscissa (x₄), in the trailing edge zone both the function g(x) which define the one half thickness distribution, also its first order derivative must cancel in the trailing edge, i.e. g(1) = g'(1) =0, so that on the upper side the airfoil section composes of a convex arc (5) which passes through the points (Cₑ) called the second junction point on the upper side and (Dₑ) called the second inflexion point on the upper side having the defined abscissas (x₅), and (x₆) respectively, also the concave arc (6) which passes through (Dₑ) and is tangent to the skeleton line in the trailing edge (F), on the lower side the airfoil section composes of a concave arc (7) which passes through the points (Cᵢ) called the second junction point on the lower side and (Dᵢ) called the second inflexion point on the lower side, having the defined abscissas (x₇) and (x₈) respectively, also a convex arc (8) passing through (Dᵢ) and is tangent to the skeleton line in the trailing edge (F), the abscissas (x₁), (x₂), (x₃), (x₄), (x₅), (x₆), (x₇) and (x₈) being defined by using the imposed design criteria for the airfoil section and the compatibility conditions as obtained by asking for the continuity of contour and its gradient, the limit backwards positions of points (Bₑ) and (Bᵢ), and limit forwards positions of points (Cₑ) and (Cᵢ) being also conditioned by the imposed design criteria for the modified airfoil section, and always the restrictions (x₂) > (x₁), (x₄) > (x₃), (x₆) > (x₅), (x₈) > (x₇) must be satisfied.

2. The airfoil section. according to claim 1, **characterized by** a defined skeleton line s(x) that constructs a positive one half thickness distribution g(x) which satisfies in the leading and trailing edges the conditions g(0)=g'(0)=0, respectively g( 1)=g'(1)=0, and which is formed in the leading edge zone of a concave arc (9) tangent to the (Ox) axis in (O), that passes through a point (G) called the first inflexion point of thickness distribution and having the defined abscissa (x₉), also a convex arc (10) passing through (G) and a point (H) called the second inflexion point of thickness distribution, having the defined abscissa (x₁₀), in the trailing edge zone the function g(x) composes of a convex arc (11) passing through the points (I) called the last but one inflexion point of thickness distribution, and (J) called the last inflexion point of thickness distribution, having the defined abscissa (x₁₁), and (x₁₂) respectively, also the concave arc (12) passing through the point (J) and is tangent to the (Ox) axis in the trailing edge (F), the abscissas (x₉), (x₁₀), (x₁₁) and (x₁₂) being defined by using the design criteria imposed for the one half thickness distribution g(x) along the chord, also the continuity conditions for positions and slopes of component arcs.

3. The airfoil section according to claims 1 and 2, **characterized by** the fact that in the bi-directional configuration it can generate lifting axisymmetric bodies when rotating the airfoil section around the symmetry axis (β) perpendicular on the middle of the chord.

## Patentansprüche

1. Flügelquerschnitt mit einer definierten Halbdickenverteilung g(x) entlang der Flügelsehne und einer Skelettlinienfunktion s(x), die einem bekannten Flügelquerschnitt entspricht, **dadurch gekennzeichnet, dass** unabhängig von der Skelettlinie oder den Dickenformen an der Vorderkante sowohl die Halbdicke als auch ihre Ableitung erster Ordnung verschwinden, d. h. es gilt g(0)=g'(0)=0, so dass der Flügelquerschnitt auf der Oberseite aus einem konkaven Bogen (1), der die Skelettlinie s(x) in dem Punkt (O) berührt und der durch einen Punkt (Aₑ) verläuft, der als erster Wendepunkt auf der Oberseite bezeichnet wird und die definierte Abszisse (x₁) aufweist, sowie einem konvexen Bogen (2) besteht, der durch (Aₑ) und einen Punkt (Bₑ) verläuft, der als erster Knotenpunkt auf der Oberseite bezeichnet wird und die definierte Abszisse (x₂) aufweist, die Kontur des Vorderkantenbereichs auf der Unterseite aus einem konvexen Bogen (3), der die Skelettlinie s(x) in (O) berührt und der durch den Punkt (Aᵢ) verläuft, der als erster Wendepunkt auf der Unterseite bezeichnet wird und die definierte Abszisse (x₃) aufweist, dem konkaven Bogen (4) besteht, der durch den Punkt (Aᵢ) und auch durch den Punkt (Bᵢ) verläuft, der als erster Knotenpunkt auf der Unterseite bezeichnet wird und die definierte Abszisse (x₄) aufweist, im Hinterkantenbereich sowohl die Funktion g(x), die die Halbdickenverteilung definiert, als auch ihre Ableitung erster Ordnung an der Hinterkante verschwinden, d. h. g(1)=g'(1)=0, so dass der Flügelquerschnitt auf der Oberseite aus einem konvexen Bogen (5), der durch die Punkte (Cₑ), der als zweiter Knotenpunkt auf der Oberseite bezeichnet wird, und (Dₑ), der als zweiter Wendepunkt auf der Oberseite bezeichnet wird, verläuft, die die definierten Abszissen (x₅) beziehungsweise (x₆) aufweisen, sowie dem konkaven Bogen (6) besteht, der durch (Dₑ) verläuft und die Skelettlinie an der Hinterkante (F) berührt, der Flügelquerschnitt auf der Unterseite aus einem konkaven Bogen (7), der durch die Punkte (Cᵢ), der als zweiter Knotenpunkt auf der Unterseite bezeichnet wird, und (Dᵢ), der als zweiter Wendepunkt auf der Unterseite bezeichnet wird, verläuft, die die definierten Abszissen (x₇) beziehungsweise (x₈) aufweisen, sowie einem konvexen Bogen (8) besteht, der durch (Dᵢ) verläuft und die Skelettlinie an der Hinterkante (F) berührt, wobei die Abszissen (x₁), (x₂), (x₃), (x₄), (x₅), (x₆), (x₇) und (x₈) durch Verwendung der auferlegten Entwurfskriterien für den Flügelquerschnitt und die Kompatibilitätsbedingungen definiert werden, die durch die Forderung nach der Stetigkeit der Kontur und ihres Gradienten erhalten werden, wobei die hinteren Grenzpositionen der Punkte (Bₑ) und (Bᵢ) und die vorderen Grenzpositionen der Punkte (Cₑ) und (Cᵢ) ebenfalls durch die auferlegten Entwurfskriterien für den modifizierten Flügelquerschnitt bedingt sind, und immer die Einschränkungen (x₂) > (x₁), (x₄) > (x₃), (x₆) > (x₅), (x₈) > (x₇) erfüllt sein müssen.

2. Flügelquerschnitt nach Anspruch 1, **gekennzeichnet durch** eine definierte Skelettlinie s(x), die eine positive Halbdickenverteilung g(x) konstruiert, die an der Vorderkante und der Hinterkante den Bedingungen g(0)=g'(0)=0 beziehungsweise g(1)=g'(1)=0 genügt, und die an dem Vorderkantenbereich von einem konkaven Bogen (9), der die (Ox)-Achse in (O) berührt und **durch** einen Punkt (G) verläuft, der als erster Wendepunkt der Dickenverteilung bezeichnet wird und die definierte Abszisse (x₉) aufweist, sowie einem konvexen Bogen (10) gebildet wird, der **durch** (G) und einen Punkt (H) verläuft, der als zweiter Wendepunkt der Dickenverteilung bezeichnet wird und die definierte Abszisse (x₁₀) aufweist, wobei im Hinterkantenbereich die Funktion g(x) aus einem konvexen Bogen (11), der **durch** die Punkte (I), der als vorletzter Wendepunkt der Dickenverteilung bezeichnet wird, und (J), der als letzter Wendepunkt der Dickenverteilung bezeichnet wird, verläuft, die die definierten Abszissen (x₁₁) beziehungsweise (x₁₂) aufweisen, sowie dem konkaven Bogen (12) besteht, der **durch** den Punkt (J) verläuft und die (Ox)-Achse an der Hinterkante (F) berührt, wobei die Abszissen (x₉), (x₁₀), (x₁₁) und (x₁₂) **durch** Verwendung der Entwurfskriterien, die für die Halbdickenverteilung g(x) längs der Flügelsehne vorgegeben sind, und auch der Stetigkeitsbedingungen für Positionen und Steigungen benachbarter Bogen definiert werden.

3. Flügelquerschnitt nach den Ansprüchen 1 und 2, **dadurch gekennzeichnet, dass** er in der bidirektionalen Konfiguration axialsymmetrische Auftriebskörper erzeugen kann, wenn der Flügelquerschnitt um die Symmetrieachse (β) senkrecht zu der Mitte der Flügelsehne gedreht wird.

## Revendications

1. Profil aérodynamique possédant une distribution d'épaisseur moitié g(x) le long de la corde, et une fonction de ligne squelettique s(x) correspondant à un profil aérodynamique connu, **caractérisé par le fait que**, quelles que soient les formes de la ligne squelettique ou de l'épaisseur, l'épaisseur moitié et sa dérivée du premier ordre s'annulent toutes deux au bord d'attaque, autrement dit g(0) = g'(0) = 0, si bien que, sur la face supérieure, le profil aérodynamique est composé d'un arc concave (1) tangent à la ligne squelettique s(x) au point (0), et passant par un point (Aₑ) appelé premier point d'inflexion sur la face supérieure et possédant l'abscisse définie (x₁), et également d'un arc convexe (2) passant par (Aₑ) et par un point (Bₑ) appelé premier point de jonction sur la face supérieure, possédant l'abscisse définie (x₂), sur la face inférieure le contour de la région du bord d'attaque étant composé d'un arc convexe (3) tangent à s(x) en (0) et passant par le point (Aᵢ) appelé premier point d'inflexion sur la face inférieure et possédant l'abscisse définie (x₃), l'arc concave (4) passant par le point (Aᵢ), passant également par le point (Bᵢ) appelé premier point de jonction sur la face inférieure et possédant l'abscisse définie (x₄), dans la région du bord de fuite de la fonction g(x) définissant la distribution d'épaisseur moitié ainsi que sa dérivée du premier ordre devant toutes deux s'annuler au bord d'attaque, autrement dit g(1) = g'(1) = 0, si bien que, sur la face supérieure, le profil aérodynamique est composé d'un arc convexe (5) passant par les points (Cₑ), appelé deuxième point de jonction sur la face supérieure, et (Dₑ), appelé deuxième point d'inflexion sur la face supérieure, possédant respectivement les abscisses définies (x₅) et (x₆), et également de l'arc concave (6) passant par (Dₑ) et tangent à la ligne squelettique au bord de fuite (F), sur la face inférieure le profil aérodynamique est composé d'un arc concave (7) passant par les points (Cᵢ), appelé deuxième point de jonction sur la face inférieure, et (Dᵢ), appelé deuxième point d'inflexion sur la face inférieure, possédant respectivement les abscisses définies (x₇) et (x₈), et également d'un arc convexe (8) passant par (Dᵢ) et tangent à la ligne squelettique au bord de fuite (F), les abscisses (x₁), (x₂), (x₃), (x₄), (x₅), (x₆), (x₇) et (x₈) étant définies à l'aide des critères de conception imposés pour le profil aérodynamique et des conditions de compatibilité obtenues en exigeant la continuité du contour et de son gradient, les positions limites arrière des points (Bₑ) et (Bᵢ) et les positions limites avant des points (Cₑ) et (Cᵢ) étant également conditionnées par les critères de conception imposés pour le profil aérodynamique modifié, les restrictions (x₂) > (x₁), (x₄) > (x₃), (x₆) > (x₅), (x₈) > (x₇) doivent toujours être satisfaites.

2. Profil aérodynamique selon la revendication 1, **caractérisé par** une ligne squelettique définie s(x) qui génère une distribution d'épaisseur moitié positive g(x) qui satisfait, aux bords d'attaque et de fuite, aux conditions g(0) = g'(0) = 0, respectivement g(1) = g'(1) = 0, et qui est formée, dans la région du bord d'attaque, d'un arc concave (9) tangent à l'axe (Ox) en (O), passant par un point (G), appelé premier point d'inflexion de la distribution d'épaisseur, et possédant l'abscisse définie (x₉), et également d'un arc convexe (10) passant par (G) et un point (H), appelé deuxième point d'inflexion de la distribution d'épaisseur, possédant une abscisse définie (x₁₀), dans la région du bord de fuite la fonction g(x) est composée d'un arc convexe (11) passant par les points (I), appelé avant-dernier point d'inflexion de la distribution d'épaisseur, et (J), appelé dernier point d'inflexion de la distribution d'épaisseur, possédant respectivement les abscisses définies (x₁₁) et (x₁₂), et également de l'arc concave (12) passant par le point (J) et tangent à l'axe (Ox) au bord de fuite (F), les abscisses (x₉), (x₁₀), (x₁₁) et (x₁₂) étant définies à l'aide des critères de conception imposés pour la distribution d'épaisseur moitié g(x) le long de la corde et également les conditions de continuité pour des positions et des pentes d'arcs constitutifs.

3. Profil aérodynamique selon les revendications 1 et 2, **caractérisé par le fait que**, dans la configuration bidirectionnelle, il est capable de générer des corps portants axisymétriques lors de la rotation du profil aérodynamique autour de l'axe de symétrie (β) perpendiculaire au milieu de la corde.
